# EUROPEAN PATENT SPECIFICATION

(11) **EP 2 587 013 B1**
(45) Date of publication and mention of the grant of the patent: **16.07.2014**
(21) Application number: 12189512.2
(22) Date of filing: 23.10.2012
(51) Int. Cl.: F01P 1/02, F01P 1/06, F02B 63/02, A01D 34/90, F01P 11/12

(54) **Backpack work machine**
Rucksackartig tragbare Arbeitsmaschine
Machine de travail de sac à dos

(30) Priority: 24.10.2011 JP 2011233332
(43) Date of publication of application: 01.05.2013
(73) Proprietor: Yamabiko Corporation, Ohme-shi Tokyo 198-8760 (JP)
(72) Inventor: OHTSUBO, Tomohiro, Kokubunji-shi Tokyo 185-0022 (JP); GOTO, Tadao, Ohme-shi Tokyo 198-0023 (JP); KIKUCHI, Satoru, Fussa-shi Tokyo 197-0003 (JP)
(74) Representative: Schaumburg, Thoenes, Thurn, Landskron, Eckert

(56) References cited:
- US-A- 2 519 936
- US-A- 6 047 668
- US-A1- 2005 061 265

## Description

### FIELD OF THE INVENTION

The present invention generally relates to a powered work machine such as a brush cutter, power sprayer, power blower, hedge trimmer, or the like. More particularly, the invention relates to a backpack work machine having an internal combustion engine as a power source, which is carried on the back of a worker in operation with the work machine.

### BACKGROUND OF THE INVENTION

As disclosed in, for example, Patent Documents 1 (Japanese Utility Model Laid-open Publication No. S63(1988)-112428), Patent Document 2 (Japanese Patent Laid-open Publication No. H10(1998)-248350) and Patent Document 3 (Japanese Patent Laid-open Publication No. 2005-90435), existing brush cutters, power blowers, etc. include backpack type ones intended for workers to carry their power sources on their backs when working with them. Specifically, Patent Documents 1 and 2 disclose backpack brush cutters, and Patent Document 3 discloses a backpack power blower. Patent Documents 1 and 2 each show that an internal combustion engine is borne on a back frame (backpack carrier) pivotally about a vertical axis thereof.

Since workers using backpack work machines are supposed to work with them by carrying their internal combustion engines as a heat source on their backs, a countermeasure should be taken against the heat radiated from the engines. Patent Document 1 proposes to discharge exhaust gas from the internal combustion engine downward. Specifically, Patent Document 1 proposes to insert an end pipe of an exhaust duct into a pivot shaft (vertical axis) of the engine and orient the open end of the end pipe downward. With this configuration, since exhaust gas is discharged toward a rear, lower direction relative to the user of the work machine, the exhaust gas is prevented from directly hitting the worker even when the engine is pivoted about the vertical axis.

### SUMMARY OF THE INVENTION

### Problems to be Solved by the Invention:

Backpack work machines use air-cooled internal combustion engines. Engines have been remarkably improved in performance, and even small ones have become able to generate high powers. Accordingly, even small engines need a countermeasure for reducing strains on workers by heat generated by the engines. When such an engine is carried on a worker's back, the center of gravity of the engine had better be as close as possible to the worker's body for enhancing the operability of the work machine. Therefore, from this viewpoint as well, there is a demand not only for a countermeasure to reduce strains on workers by heat of engines but also for a countermeasure to reduce strains on workers by noise generated by such engines.

It is therefore an object of the invention to reduce strains on a worker by heat generated by an internal combustion engine of a backpack work machine.

Another object of the invention is to reduce strains on a worker by noise of an internal combustion engine of a backpack work machine.

Means for Solution of the Problems:

Those objects of the invention are achieved by providing a backpack work machine powered by an air-cooled internal combustion engine (14) to be held pivotally on a back frame (6) which is to be carried on a worker's back, comprising:
a fan (56) driven by the internal combustion engine (14) to draw in ambient air and thereby generate cooling air for cooling the internal combustion engine, and
a cover member (12) which surrounds at least an upper part of the internal combustion engine (14) and an exhaust muffler (38) to define a cooling air passage (60) for the cooling air generated by the fan (56),
wherein the cooling air passage (60) includes:
   a first air passage (62) extending along a first lateral face (18b) of a cylinder block (18) of the internal combustion engine (14), said first lateral face (18b) being at a far side from the exhaust muffler (38);
   a second air passage (64) contiguous to the first air passage and extending along a second lateral face (18c) of the cylinder block (18), said second lateral face (18c) being at a far side from the fan (56):
a third air passage (66) extending along a third lateral face (18d) of the cylinder block (18), said third lateral face (18d) being at a near side to the exhaust muffler (38); and
an outlet passage (70) extending in communication with the second and third air passages (64, 66), said outlet passage (70) including a space in which the exhaust muffler (38) is disposed, and having an outlet (50a) opening to an external space at a near side to the fan (56).

According to the present invention, since the air-cooled engine is surrounded by the cover member, engine noise reaching worker's ears can be reduced. Additionally, since the fan driven by the engine draws in ambient air as cooling air and feeds it into inside the cover member, the engine is forcibly cooled by the cooling air. Thus, heat generated by the engine can be conveyed externally by the cooling air, and strains on the worker by heat of the engine can be reduced.

A part of the cooling air drawn by the fan into inside the cover member flows through the first air passage while cooling the first lateral face of the cylinder block, which is at the far side from the exhaust muffler, and then flows to the second air passage while cooling the second lateral face of the cylinder block, which is at the far side from the fan. Further, the cooling air enters the outlet passage, and it is discharged externally from the outlet passage. Since the exhaust muffler is disposed in the outlet passage, the cooling air is discharged externally together with exhaust gas discharged from the exhaust muffler.

Another part of the cooling air drawn by the fan into inside the cover member flows through the third air passage while cooling the third lateral face of the cylinder block, which is nearest to the exhaust muffler. This part of the cooling air in the third air passage joins the cooling air from the second air passage, and then enters the outlet passage together. The cooling air from the second air passage can enter the outlet passage more smoothly, whereas the cooling air from the third air passage is drawn into the flow of the cooling air flowing from the second air passage at a higher velocity. In this manner, cooling efficiency of the engine is enhanced.

In a preferred embodiment of the present invention, a juncture (72) where the second air passage (64) joins with the third air passage (66) has an outwardly swelling configuration. Therefore, the cooling air from the second air passage can be redirected smoothly to the outlet passage (70). In this or another preferred embodiment of the invention, the cover member surrounds at least an upper part of the engine, i.e. the portion of the engine excluding a crankcase, and the exhaust muffler such that the ambient air is drawn in by the fan from around the lower part of the engine.

Other objects, features and advantages of the present invention will become apparent from the detailed explanation given below by way of preferred embodiments of the invention in conjunction with the accompanying drawings.

### BRIEF DESCRIPTION OF THE DRAWINGS

FIG. 1 is a perspective view of a backpack brush cutter according to an embodiment of the present invention, taken from a diagonally upper angle.
FIG. 2 is a perspective view of the backpack brush cutter shown in FIG. 1, from which an upper cover has been removed.
FIG. 3 is a partly sectional, perspective view of the brush cutter shown in FIG. 2.
FIG. 4 is a view of the backpack brush cutter, viewed from the side of an exhaust muffler.
FIG. 5 is a view of the backpack brush cutter shown in FIG. 1, viewed diagonally from the side of the exhaust muffler.
FIG. 6 is a diagram for explaining that cooling air discharged from inside the cover member does not blow to a worker in operation with the backpack brush cutter according to the embodiment of the invention even when the engine is pivoted.
FIG. 7 explains the cooling air passage defined by the cover member surrounding the engine and exhaust muffler of the backpack brush cutter according to the embodiment.

### DETAILED DESCRIPTION OF THE INVENTION

Preferred embodiments of the invention are explained below with reference to the drawings. These embodiments, however, should not be construed to limit the invention, but various modifications and variations that ordinary persons in the art will be able to make are contemplated in the scope of the invention as well.

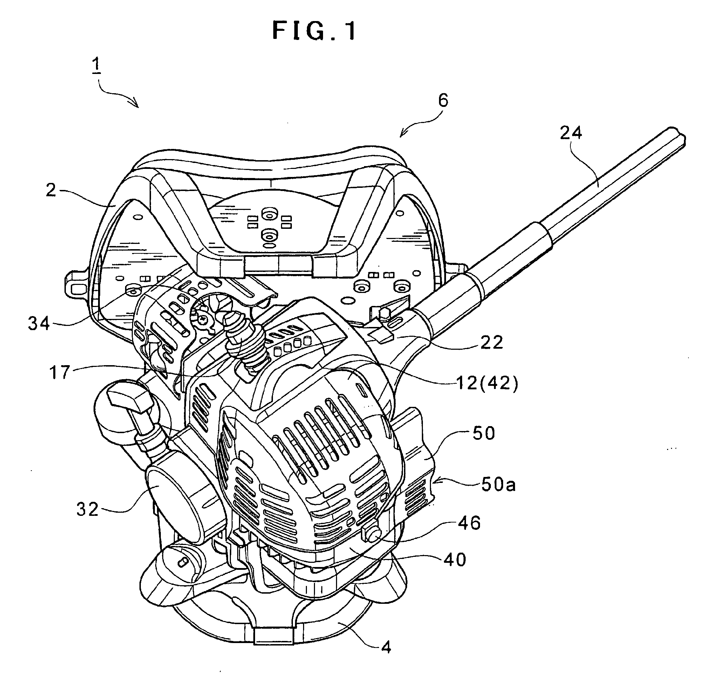

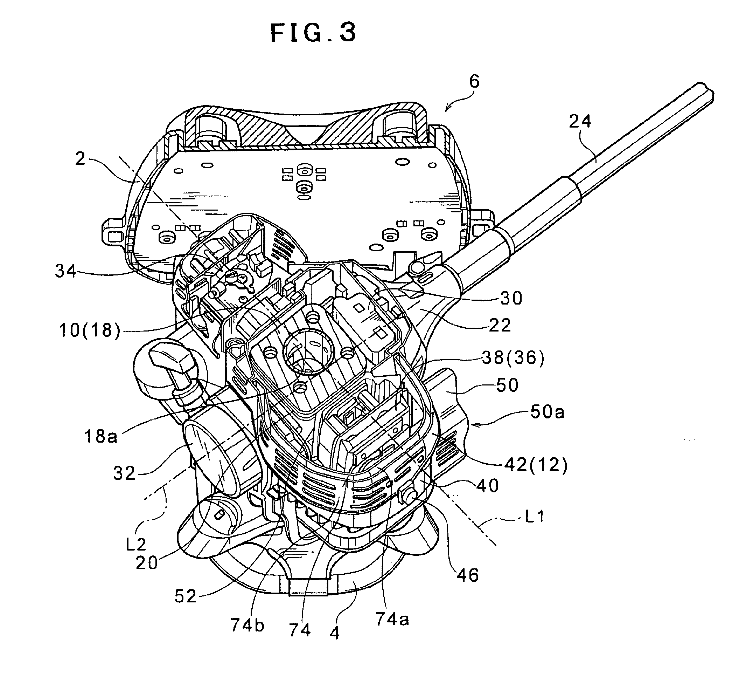

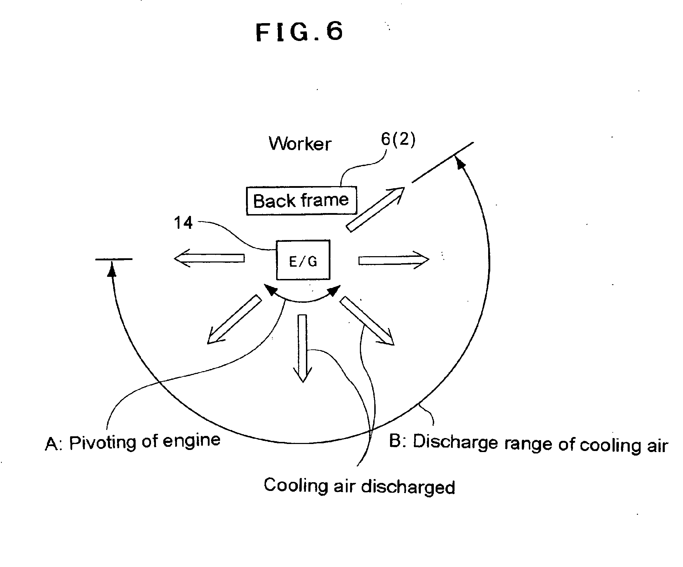

Explanation is begun first referring to FIG. 1, which is a perspective view of the backpack brush cutter taken as an example of the backpack work machine. This is a view taken from a diagonally rear angle of the brush cutter. As shown in FIG. 1, the backpack brush cutter, generally labeled with reference numeral 1, includes a back frame (backpack carrier) 6 having a vertical frame element 2 and a horizontal frame element 4. The vertical frame element 2 is intended to face to the back of a worker in operation with the work machine when the worker wear it on his back, and the horizontal frame element 4 extends laterally from the lower end of the vertical frame element 2. Thus, the back frame 6 has an "L" shaped configuration when viewed from its lateral face (in a side elevation). Like in existing brush cutters, a power source 10 (FIG. 3) is pivotally mounted on the horizontal frame element 4 of the back frame 6. Pivoting direction of the power source 10 is shown by an arrow A in FIG. 6.

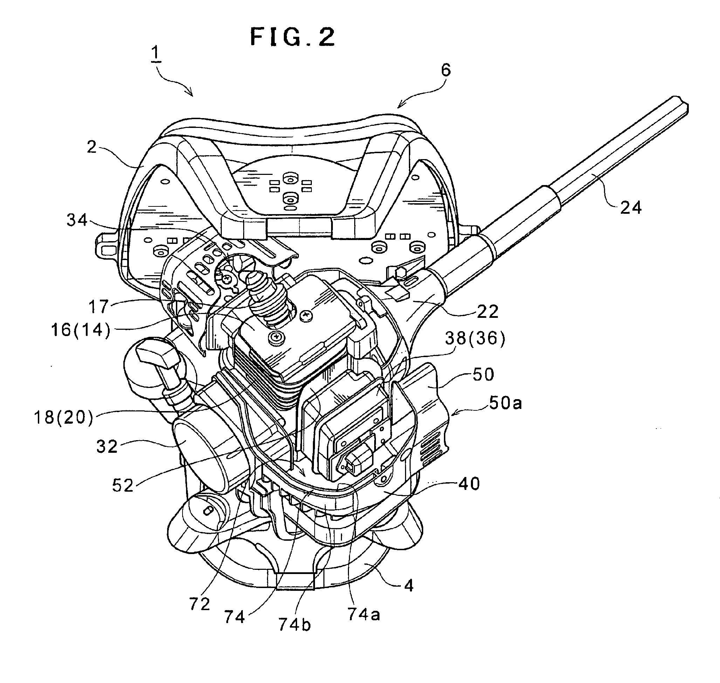

FIG. 2 is equivalent to FIG. 1 except that a cover member 12, which is a part of the power source 10, has been removed to reveal the inside structure. The power source 10 includes an internal combustion engine 14 that is an air-cooled single-cylinder two-stroke gasoline engine. As shown in FIG. 2, the engine 14 includes a cylinder block 18. The reference numeral 17 in FIG. 2 indicates an ignition plug. FIG. 3 as well is substantially the same view as FIG. 1 except that the cylinder block 18 is illustrated in the form of a fragmentary sectional view. As shown in FIG. 3, the cylinder block 18 has a bore 18a formed therein. As shown in FIG. 3, cooling fins 20 are formed around the cylinder block 18 as is well known.

The rotation output of the internal combustion engine 14 is transmitted to the working part of the work machine via a centrifugal clutch (not shown) like in existing machines. The centrifugal clutch is surrounded by a clutch cover 22 provided at one side of the engine 14. Inside the clutch cover 22, the centrifugal clutch is connected to a flexible shaft 24 via which the engine output is taken out. The flexible shaft 24 is connected at the front end thereof to a working rod, and the engine output is thus transmitted to a cutting blade provided at the free end of the working rod via the flexible shaft 24.

As shown in FIGS. 1 to 3, an ignition coil 30 is provided at one side of the cylinder block 18 and held in a level higher than the clutch cover 22. On the other hand, a recoil starter 32 is provided at the other side of the engine 14, which is the far side from the clutch cover 22 with respect to a cylinder bore 18a (see FIG. 3) of the engine 14. The worker can start the engine 14 by manipulating the recoil starter 32.

The internal combustion engine 14 has a suction system 34 and an exhaust system 36 at opposite positions beyond the cylinder bore 18a that is positioned between them (as shown in FIG. 3). When viewed in a plane, a first virtual line L1 connecting the suction system 34 and the exhaust system 36 intersects at a right angle with a second virtual line L2 connecting the above-mentioned clutch cover 22 and the recoil starter 32.

The internal combustion engine 14, together with the ignition coil 30 and the suction system 36 located around the internal combustion engine 14, is surrounded by the cover member 12. The cover member 12 includes a lower cover 40, which surrounds the lower portion of the exhaust muffler 38, and an upper cover 42, which surrounds the upper portions of the internal combustion engine 14 and the exhaust muffler 38. Both the upper cover 42 and the lower cover 40 are synthetic-resin moldings. The upper cover 42 is detachably fixed to the lower cover 40.

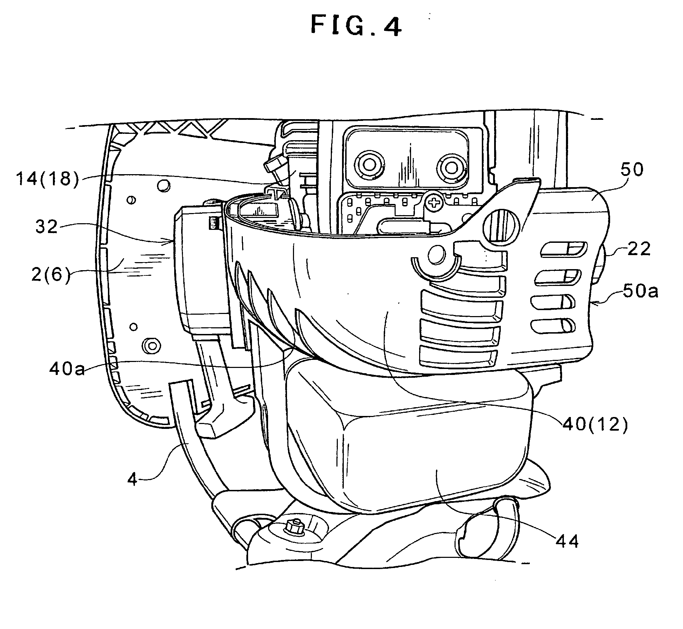

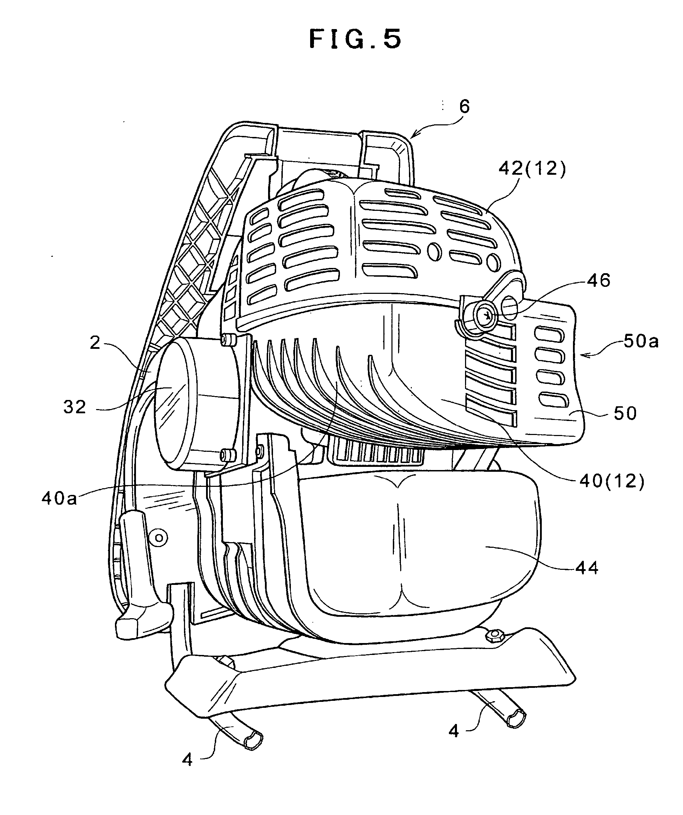

FIG. 4 is a lateral view of the engine 14 of the brush cutter 1 with the upper cover 42 being detached. FIG. 5 is a lateral view, taken diagonally, of the engine of the brush cutter 1 with the upper cover 42 being attached in place. As shown in FIGS. 4 and 5, a fuel tank 44 is provided under the internal combustion engine 14.

As shown in FIGS. 4 and 5, the upper cover 42 is fixed with a screw 46 (see FIG. 5) to the lower cover 40. The lower cover 40 has an outlet tube 50 extending toward the clutch cover 22, that is, toward the flexible shaft 24. The outlet tube 50 is located at the height of the exhaust muffler 38. The outlet tube 50 is rectangular in cross section, and has an outlet 50a open horizontally toward a space next to the clutch cover 22 that is located at the far side from the recoil starter 32 about the cylinder block 18.

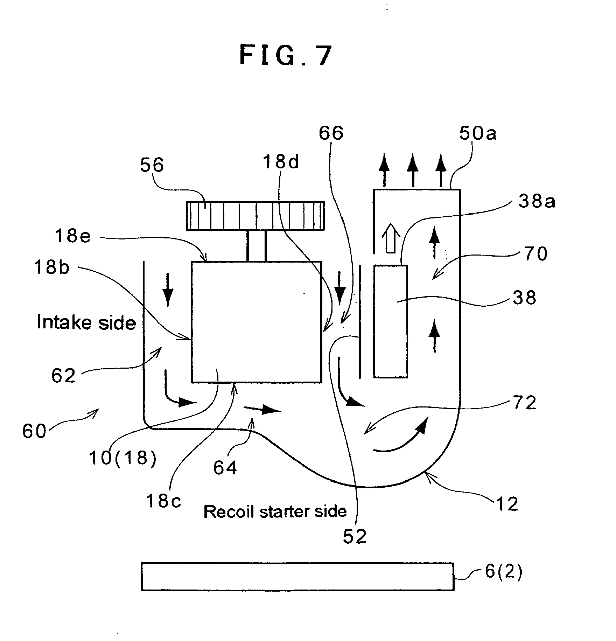

The upper cover 42 of the cover member 12 surrounds the cylinder block 18, cylinder head 16 and exhaust system 36 (upper portion of the exhaust muffler 38) of the internal combustion engine 14 while the lower cover 40 of the cover member 12 surrounds the exhaust system 36 (lower portion of the exhaust muffler 38). Thus, the cover member 12 including both the lower and upper covers 40 and 42 functions to cut the noise and to lead heat radiated from the engine 14 and the exhaust system 36 to the outlet 50a, thereby forcibly discharging the heat to outside the cover member 12. Of course, the engine 14 may be surrounded as a whole by the cover member 12. It should be noted that the exhaust muffler 38 is located at the height of the outlet tube 50 and an exhaust port (labeled with reference numeral 38a in FIG. 7) is open toward the outlet tube 50. That is to say, the exhaust muffler 38 has the exhaust port horizontally open toward the space next to the clutch cover 22, and exhaust gas discharged from the exhaust muffler 38 is discharged to outside through the outlet 50a of the outlet tube 50.

FIG. 7 explains a flow of air that forcibly cools the internal combustion engine 14. As shown, a metallic partition plate 52 is provided between the cylinder block 18 and the exhaust muffler 38. More particularly, the partition plate 52 stands upright at a fixed position between the cylinder block 18 and the exhaust muffler 38. Further, the partition plate 52 is disposed in parallel with, and at a fixed distance from, a lateral face 18d of the cylinder block 18, which is at the near side to the exhaust muffler 38. Thus, a cooling air passage (third air passage 66 which will be explained later) extending along the lateral face 18d of the cylinder block 18 is formed between the cylinder block 18 and the exhaust muffler 38 (FIGS. 2 and 3).

Still referring to FIG. 7, a centrifugal fan 56 is interposed between the internal combustion engine 14 and the centrifugal clutch. The engine 14 is driven by the internal combustion engine 14. The centrifugal fan 56 is surrounded by the clutch cover 22. The clutch cover 22 has formed therein an ambient air inlet (not shown) through which ambient air is supplied to the centrifugal fan 56 from a clearance between a crank case (not shown) and a fuel tank 44 (see FIG. 4) and from under the suction system 34.

The ambient air taken in by the centrifugal fan 56 travels around upper portions (cylinder block 18 and cylinder head 16) of the engine 14 and it is discharged through the outlet 50a of the outlet tube 50. While passing around the cylinder block 18 and the cylinder head 16 that generate heat, the ambient air cools the engine 14 by drawing heat from the engine 14.

FIG. 7 also shows the air passages defined around the engine 14 and the exhaust muffler 38 in a plan view to explain the configuration of the air passages. The cylinder block 18 has the cooling fins 20 as having previously been described. The cooling fins 20 have a rectangular profile when viewed from above. Around the cylinder block 18 there is defined a cooling air passage 60. This cooling air passage 60 includes a first air passage 62 extending along a lateral face 18b of the cylinder block 18, which is at the intake side of the cylinder block 18, a second air passage 64 extending along a lateral face 18c of the cylinder block 18, which is at the near side to the recoil starter 32, and a third air passage 66 extending along a lateral face 18d of the cylinder block 18, which is at the exhaust side of the cylinder block 18. It should be noted that in FIG. 7 the solid lines defining the cooling air passage 60 indicate the wall or inside face of the cover member 12 defining the cooling air passage 60.

Ambient air taken by the centrifugal fan 56 into the cooling air passage 60 flows upward along a lateral face 18e of the cylinder block 18, which is at the near side to the flexible shaft 24, to cool the lateral face 18e nearer to the flexible shaft 24. Then, the air diverges to the first air passage 62 extending at the suction side along the lateral face 18b and to the third air passage 66 extending at the exhaust side along the lateral face 18d, and cools the lateral face 18b and the lateral face 18d while flowing along these lateral faces 18b and 18d toward the recoil starter 32. Having flown toward the recoil starter 32 along the lateral face 18b at the suction side, the air enters into a second air passage 64 extending along a lateral face 18c of the cylinder block 18, which is at the near side to the recoil starter 32, and cools this lateral face 18c while flowing along it toward the exhaust side.

The air having passed by the lateral face 18d at the exhaust side (through the third air passage 66) and having moved in the direction toward the recoil starter 32 joins the air having arrived there after travelling through the second air passage 64 along the lateral face 18c of the cylinder block 18, which is nearer to the recoil starter 32.

The partition plate 52 interposed between the engine 14 and exhaust muffler 38 defines a cooling air outlet passage 70 inside the cover member 12 as well. Namely, the partition plate 52 functions as a bulkhead between the third air passage 66 and the outlet passage 70.

As shown in FIG. 7, the exhaust muffler 38 is located in the outlet passage 70 and the exhaust port 38a of the exhaust muffler 38 is open to downstream of the outlet passage 70, that is, toward the outlet 50a of the outlet tube 50 as mentioned above.

Still referring to FIG. 7, reference numeral 72 is assigned to the juncture of the third air passage 66 (along the lateral face 18d at the exhaust side) and the second air passage 64 (along the lateral face 18c at the side of the recoil starter 32). In a plan view of the cooling air passage 60, it is best understood that the juncture 72 has a passage configuration bulging outwardly and rounding smoothly. The outwardly bulging juncture 72 functions as a airflow reversal portion that reverses an air flow through the air passage 66, which is a flow toward the recoil starter 32, and redirects it toward a space at the side of the centrifugal fan 56 (outlet 50a of the outlet tube 50).

The air flow passing through the third air passage 66 at the exhaust side of the cylinder block 18 enters into the outlet passage 70 while changing its flow direction. On the other hand, the air flow passing through the second air passage 64 at the side of the recoil starter 64 of the cylinder block 18 enters into the outlet passage 70 while changing its direction by approximately 90 degrees. Therefore, this air flow enters the outlet passage 70 more smoothly. As a result, the air flow passing through the second air passage 64 has a higher speed than the air flow passing through the third air passage 66. Further, since the juncture 72 bulges outwardly and rounds smoothly in the embodiment of the present invention as mentioned above, the air flow passing through the second air passage 64 at a higher speed enters the outlet passage 70 smoothly. Then, the faster air flow from the second air passage 64 can entrain the air flow passing through the third air passage 66 and can guide it along to the outlet passage 70 by reversing its flowing direction. In this manner, the cooling air can be discharged along with the exhaust gas through the outlet passage 70 to the space nearer to the centrifugal fan 56. Therefore, it is possible to provide a forced air cooling system superior in efficiency of cooling air discharge.

Owing to this improved efficiency of cooling air discharge, the first to third air passages 62, 64 and 66 defined around the cylinder block 18 can be designed much narrower in width, whereby cooling air from the centrifugal fan 56 can be efficiently used to cool the engine.

As best understood from FIGS. 4 and 5, the lower cover 40 has a bottom 40a that is curved when seen in a lateral view of the engine 14. The bottom 40a slopes obliquely downward from its end nearer to the recoil starter 32 toward its opposite end nearer to the outlet tube 50. The slope of the bottom 40a is rounded smoothly to bulge out downwardly. The bottom 40a of the lower cover 40 constitutes a bottom of the juncture 72 of the aforementioned cooling air passage 60.

Since the bottom of the juncture 72 is formed to slope toward the outlet tube 50, the lower layer flow of cooling air in the juncture 72 can be led smoothly to the outlet tube 50. Thus, it is possible to prevent cooling air from partially staying at the juncture 72 and hence to enhance the efficiency of discharging the cooling air.

As shown in FIG. 2, the lower cover 40 is designed to have a double-wall structure 74 at the portion thereof near the recoil starter 32 and the exhaust muffler 38. The double-wall structure 74 includes an inner wall 74a and an outer wall 74b distant from each other. This double-wall structure is destined to keep the surface of the outer wall 74b at a lower temperature such that workers will not be burned even when their hands inadvertently touch that surface.

Since the most part of the engine 14 is surrounded by the cover member 12 composed of the lower cover 40 and the upper cover 42, engine noise reaching workers' ears can be reduced.

With the backpack work machine 1 having been described in the foregoing, the worker performs tasks (grass cutting) by oscillating the working portion of the work machine while carrying the engine 14 on the back. For such working, the worker may pull the flexible shaft 24 forward either from the right side of the back frame 6 for a right-hand mode or from the left side of the back frame 6 for a left-hand mode to position the working portion in front of him to be ready for the intended work. The engine 14 can pivot following movements of the flexible shaft in any of these modes. Even when the engine 14 pivots to a maximum extent, cooling air and exhaust gas will be discharged to a space at the near side to the centrifugal fan 56 of the engine 14, and they do not blow onto the worker. The cooling air discharged in a range indicated with an arrow B in FIG. 6.

Furthermore, in the backpack work machine 1, cooling air having removed heat from the engine 14 and the exhaust muffler 38 is discharged through the outlet 50a as an air flow oriented horizontally. Therefore, the cooling air thus discharged can be prevented from being caught again by the centrifugal fan 56.

### INDUSTRIAL APPLICABILITY

The present invention is suitable for application to a work machine having an internal combustion engine as a power source, such as a brush cutter, power sprayer, power blower, hedge trimmer, etc., which is of a backpack type whose internal combustion engine is carried on the back of a worker in operation with it.

## Claims

1. A backpack work machine powered by an air-cooled internal combustion engine (14) to be held pivotally on a back frame (6) which is to be carried on a worker's back, comprising:
a fan (56) driven by the internal combustion engine (14) to draw in ambient air and thereby generate cooling air for cooling the internal combustion engine, and
a cover member (12) which surrounds at least an upper part of the internal combustion engine and an exhaust muffler (38) to define a cooling air passage (60) for the cooling air generated by the fan (56),
wherein the cooling air passage (60) includes:
a first air passage (62) extending along a first lateral face (18b) of a cylinder block (18) of the internal combustion engine, said first lateral face being at a far side from the exhaust muffler (38);
a second air passage (64) contiguous to the first air passage and extending along a second lateral face (18c) of the cylinder block (18), said second lateral face (18c) being at a far side from the fan (56):
a third air passage (66) extending along a third lateral face (18d) of the cylinder block (18), said third lateral face being at a near side to the exhaust muffer (38) and
an outlet (70) passage extending in communication with the second and third air passages (64, 66), said outlet passage (70) including a space in which the exhaust muffler (38) is disposed, and having an outlet (50a) opening to an external space at a near side to the fan (56).

2. The backpack work machine according to Claim 1, wherein the second (64) and third air (66) passages join at a juncture, and the juncture has an outwardly bulging configuration.

3. The backpack work machine according to Claim 1 or 2, wherein a plate member (52) is provided between the internal combustion engine (14) and the exhaust muffler (38), and the plate member constitutes a partition between the third air passage (66) and the outlet passage (70).

4. The backpack work machine according to one of Claims 1 to 3, wherein the cooling fins (20) of the cylinder block (18) have a rectangular profile when viewed in a plan view.

5. The backpack work machine according to one of Claims 1 to 4, wherein the exhaust muffler (38) has an exhaust port (38a) that opens toward the outlet (50a) of the outlet tube (50).

6. The backpack work machine according to one of Claims 1 to 5, wherein the cover member (12) has a curved bottom at a portion thereof corresponding to the juncture, and the bottom at the portion corresponding to the juncture slopes obliquely downward toward the outlet (50a) of the outlet tube (50) when viewed laterally.

## Patentansprüche

1. Rucksackartig tragbare Arbeitsmaschine, angetrieben von einem luftgekühlten Verbrennungsmotor (14), der schwenkbar auf einem Rückenrahmen (6) zu halten ist, der auf dem Rücken eines Arbeiters zu tragen ist, mit:
einem Lüfter (56), der von dem Verbrennungsmotor (14) angetrieben wird, um Umgebungsluft anzusaugen und dadurch Kühlluft zum Kühlen des Verbrennungsmotors zu erzeugen, und
einem Abdeckelement (12), das zumindest einen oberen Teil des Verbrennungsmotors umgibt, und einem Auspuffschalldämpfer (38) zum Bilden eines Kühlluftdurchganges (60) für die von dem Lüfter (56) erzeugte Kühlluft,
wobei der Kühlluftdurchgang (60) umfasst:
einen ersten Luftdurchgang (62), der sich entlang einer ersten Seitenfläche (18b) eines Zylinderblocks (18) des Verbrennungsmotors erstreckt,
wobei sich die erste Seitenfläche an einer von dem Auspuffschalldämpfers (38) entfernt gelegenen Seite befindet;
einen zweiten Luftdurchgang (64), der an den ersten Luftdurchgang angrenzt und sich entlang einer zweiten Seitenfläche (18c) des Zylinderblocks (18) erstreckt, wobei sich die zweite Seitenfläche (18c) an einer von dem Lüfter (56) entfernt gelegenen Seite befindet;
einen dritten Luftdurchgang (66), der sich entlang einer dritten Seitenfläche (18d) des Zylinderblocks (18) erstreckt, wobei sich die dritte Seitenfläche an einer zu dem Auspuffschalldämpfers (38) nah gelegenen Seite befindet, und
einen Auslassdurchgang (70), der sich mit dem zweiten und dritten Luftdurchgang (64, 66) in Verbindung stehend erstreckt, wobei der Auslassdurchgang (70) einen Raum aufweist, in dem der Auspuffschalldämpfer (38) angeordnet ist, und einen Auslass (50a) hat, der zu einem externen Raum hin an einer zu dem Lüfter (56) nah gelegenen Seite geöffnet ist.

2. Rucksackartig tragbare Arbeitsmaschine nach Anspruch 1, wobei sich der zweite (64) und dritte Luftdurchgang (66) an einer Verbindungsstelle verbinden und die Verbindungsstelle eine nach außen gewölbte Gestalt hat.

3. Rucksackartig tragbare Arbeitsmaschine nach Anspruch 1 oder 2, wobei ein Plattenelement (52) zwischen dem Verbrennungsmotor (14) und dem Auspuffschalldämpfers (38) vorgesehen ist und das Plattenelement eine Abtrennung zwischen dem dritten Luftdurchgang (66) und dem Auslassdurchgang (70) bildet.

4. Rucksackartig tragbare Arbeitsmaschine nach einem der Ansprüche 1 bis 3, wobei die Kühlrippen (20) des Zylinderblocks (18) in einer Draufsicht ein Rechteckprofil haben.

5. Rucksackartig tragbare Arbeitsmaschine nach einem der Ansprüche 1 bis 4, wobei der Auspuffschalldämpfer (38) einen Auslasskanal (38a) hat, der sich in Richtung des Auslasses (50a) des Auslassrohrs (50) öffnet.

6. Rucksackartig tragbare Arbeitsmaschine nach einem der Ansprüche 1 bis 5, wobei das Abdeckelement (12) einen gekrümmten unteren Teil an einem Abschnitt, der der Verbindungsstelle entspricht, hat und der untere Teil an dem der Verbindungsstelle entsprechenden Abschnitt in einer Seitenabsicht schräg nach unten in Richtung des Auslasses (50a) des Auslassrohrs (50) abfällt.

## Revendications

1. Engin porté dans le dos, entraîné par un moteur à combustion interne (14) refroidi par air, maintenu en pivotement sur un châssis arrière (6), porté sur le dos d'un opérateur, comprenant :
un ventilateur (56) entraîné par le moteur à combustion interne (14) pour aspirer l'air ambiant et générer, de ce fait, de l'air de refroidissement pour refroidir le moteur à combustion interne, et
un élément de couvercle (12) entourant au moins une partie supérieure du moteur à combustion interne et un silencieux d'échappement (38) pour définir un passage d'air de refroidissement (60) pour l'air de refroidissement généré par le ventilateur (56),
dans lequel le passage d'air de refroidissement (60) comprend :
un premier passage d'air (62) s'étendant le long d'une première face latérale (18b) d'un bloc-cylindres (18) du moteur à combustion interne, ladite première face latérale étant du côté opposé au silencieux d'échappement (38) ;
un deuxième passage d'air (64) contigu au premier passage d'air et s'étendant le long d'une deuxième face latérale (18c) du bloc-cylindres (18), ladite deuxième face latérale (18c) étant du côté opposé au ventilateur (56) ;
un troisième passage d'air (66) s'étendant le long d'une troisième face latérale (18d) du bloc-cylindres (18), ladite troisième face latérale étant à proximité du silencieux d'échappement (38), et
un passage de sortie (70) s'étendant en communication avec les deuxième et troisième passages (64, 66), ledit passage de sortie (70) incluant un espace dans lequel le silencieux d'échappement (38) est disposé, et ayant une ouverture (50a) s'ouvrant sur un espace extérieur, à proximité du ventilateur (56).

2. Engin porté dans le dos selon la Revendication 1, dans lequel les deuxième (64) et troisième (65) passages d'air se réunissent à une jonction, et la jonction présente une configuration faisant saillie vers l'extérieur.

3. Engin porté dans le dos selon la Revendication 1 ou 2, dans lequel un élément de plaque (52) est monté entre le moteur à combustion interne (14) et le silencieux d'échappement (38), et dans lequel l'élément de plaque constitue une séparation entre le troisième passage d'air (66) et le passage de sortie (70).

4. Engin porté dans le dos selon l'une des Revendications 1 à 3, dans lequel les ailettes de refroidissement (20) du bloc-cylindres (18) ont un profil rectangulaire lorsqu'elles sont vues en plan.

5. Engin porté dans le dos selon l'une des Revendications 1 à 4, dans lequel le silencieux
d'échappement (38) comporte un orifice d'échappement (38a) qui s'ouvre vers la sortie (50a) du tube de sortie (50).

6. Engin porté dans le dos selon l'une des Revendications 1 à 5, dans lequel l'élément de couvercle (12) comporte une partie inférieure incurvée à une portion de celui-ci, correspondant à la jonction, et dans lequel la partie inférieure à la portion correspondant à la jonction s'incline obliquement vers le bas en direction de la sortie (50a) du tube de sortie (50), lorsqu'elle est vue latéralement.
